# EUROPÄISCHE PATENTSCHRIFT

(11) **EP 1 704 397 B1**
(45) Veröffentlichungstag und Bekanntmachung des Hinweises auf die Patenterteilung: **08.02.2017**
(21) Anmeldenummer: 04820819.3
(22) Anmeldetag: 08.12.2004
(51) Int. Cl.: G01L 23/12, G01L 23/18

(54) **DRUCKSENSOR**
PRESSURE SENSOR
CAPTEUR DE PRESSION

(30) Priorität: 23.12.2003 DE 10360941
(43) Veröffentlichungstag der Anmeldung: 27.09.2006
(73) Patentinhaber: KMW Kaufbeurer Mikrosysteme Wiedemann GmbH, 87600 Kaufbeuren (DE)
(72) Erfinder: WIEDEMANN, Wolfgang, 87600 Kaufbeuren (DE); WUNDERLICH, Rainer, 87600 Kaufbeuren (DE)
(74) Vertreter: Pfister, Stefan Helmut Ulrich
(86) Internationale Anmeldenummer: PCT/EP2004/013970
(87) Internationale Veröffentlichungsnummer: WO 2005/064298

(56) Entgegenhaltungen:
- WO-A-2004/081510
- US-A- 3 645 136
- US-A- 4 753 109

## Beschreibung

Die Erfindung betrifft einen Drucksensor, bestehend aus einer Membran, die eine die druckbedingte Membranverformung aufnehmende Meßeinrichtung von dem unter Druck stehenden Druckraum trennt und der Drucksensor von einem Grundkörper gebildet ist, der in eine Öffnung einer den Druckraum begrenzenden Wand eingesetzt ist.

Vorgenannte Drucksensoren sind zum Beispiel aus der europäischen Patentanmeldung 392 486 bekannt. Hier wird ein Drucksensor für den Verbrennungsraum von Kolbenverbrennungsmotoren beschrieben.

EP 0 472 219 A2, US 4,257,260 und US 3,645,136 zeigen jeweils eine Membran, die parallel zur Flächennormalen der Öffnung ist und die einstückig aus dem Grundkörper herausgearbeitet, nicht jedoch in diesem eingesetzt ist.

Die Anordnung ist dabei so gewählt, daß die Membran parallel zu der den Druckraum begrenzenden Wand orientiert ist. Die Membran ist auch an dem in den Druckraum hineinstehenden Ende des Sensors ungeschützt angeordnet. Diese ungeschützte Bauweise kann dazu führen, daß zum Beispiel die Membran beim Einbau beschädigt wird und dann der Drucksensor unbrauchbar ist. Die Größe der Membran ist bei dieser Variante durch die zur Verfügung stehende Öffnung im Druckraum begrenzt, wobei solche vorbekannten Drucksensoren zum Beispiel nicht im Zylinderkopf einbaubar sind, da dort unter Umständen nur eine kleine Öffnung vorgesehen werden kann, da der übrige Raum zum Beispiel von Einlaß- und Auslaßventilen belegt ist.

Ausgehend von diesem Stand der Technik ist es Aufgabe der vorliegenden Erfindung, einen Drucksensor vorzuschlagen, der möglichst zuverlässig ist.

Gelöst wird diese Aufgabe durch einen Drucksensor gemäß dem Anspruch 1.

Entgegen den Vorschlägen zum Stand der Technik wird die Membran nicht parallel zur Wand orientiert, sondern bevorzugt rechtwinklig, also parallel zu seiner Flächennormale (diese steht senkrecht zu der in der Öffnung gedachten Fläche). Dadurch ist es einfach möglich, die empfindliche Membran zu schützen, zum Beispiel ein entsprechendes Gehäuse anzuordnen. Das Gehäuse hat dabei natürlich eine Ausnehmung, um die Membran mit dem Druckraum in Verbindung zu bringen.

Oftmals wird ein erfindungsgemäßer Drucksensor in einen zylinderartigen Brennraum eingebaut, dessen Wand zum Beispiel die Mantelfläche des Zylinders ist, oder aber der Einbauraum ist sphärisch (zum Beispiel im Zylinderkopf) ausgebildet. In diesem Fall wird die Öffnung nicht von einer planen Fläche beschrieben, sondern unter Umständen von einer entsprechend gebogenen Fläche. In diesem Fall sei die Öffnung dahingehend verstanden, daß die in Ansicht sich darstellende Öffnung gemeint ist und die Membranfläche parallel oder spitzwinklig zu der Flächennormale dieser in Ansicht dargestellten Öffnung orientiert ist.

Eine andere Möglichkeit die bevorzugte Orientierung der Membran anzugeben, ist im Bezug auf die Einbaurichtung des Drucksensors in die Wand. Oftmals wird der Drucksensor in den den Druckraum umgebenden Körper, zum Beispiel die Zylinderwand oder den Zylinderkopf, eingebaut, wobei zunächst in die Wand eine entsprechende Bohrung einzubringen ist. Diese Bohrung wird definiert durch eine Längsachse, die üblicherweise parallel zur Flächennormalen ist. Daher ist auch die Einbaurichtung parallel zur Flächennormale im Sinne dieser Anmeldung.

Ein besonderer Vorzug der Erfindung liegt auch darin, daß durch diese erfindungsgemäße Anordnung der Membran die zur Verfügung stehende Membranfläche nicht mehr abhängig ist von der Öffnung in der Wand. Die Membran kann sich rechtwinklig zur Wand erstrecken und entsprechend den gewünschten Eigenschaften optimiert werden. Hieraus eröffnet sich die Möglichkeit, den erfindungsgemäßen Drucksensor zum Beispiel in Bereichen einzubauen, wo üblicherweise nur Platz für eine kleine Öffnung zur Verfügung steht und wo die bekannten Drucksensoren aufgrund der benötigten Fläche beziehungsweise Öffnung nicht eingebaut werden können.

Die Erfindung verbindet daher optimalen Schutz der empfindlichen Membran mit einer sehr platzsparenden Anordnung des Sensors im Druckraum, ohne dabei die Membran notwendigerweise sehr klein ausgestalten zu müssen, was zu Lasten der Meßgenauigkeit geht.

Der Drucksensor braucht natürlich einen entsprechenden Zugang zu dem Druckraum, dessen Druck zu messen ist. Günstigerweise wird hierzu in der den Druckraum begrenzenden Wand eine Bohrung vorgesehen, in die der Drucksensor eingesetzt ist.

In der Erfindung ist vorgesehen, daß der Grundkörper eine Membranausnehmung oder Membranöffnung aufweist, in welcher die Membran eingesetzt und dicht verbunden, zum Beispiel verschweißt oder verklebt ist.

Um den erfindungsgemäßen Drucksensor zu realisieren, wird ein mehrteiliger Aufbau vorgeschlagen, bei welchem zumindest Membran und Grundkörper zusammenzufügende Teile sind. Im weiteren Verlauf wird noch auf eine einteilige Ausgestaltung verwiesen werden.

Die mehrteilige Variante hat bei der Herstellung des Drucksensors entsprechende Vorteile. Da vorgesehen ist, daß die Membran die die druckbedingte Membranverformung aufnehmende Meßeinrichtung trägt, ist es günstig die Membran als eigenes Bauteil mit der Meßeinrichtung entsprechend vorzurichten und dann die Membran in den Grundkörper, welcher als Träger beziehungsweise Gehäuse der Membran dienen mag, einzubauen. Auch ist es möglich, die Membran bei der mehrteiligen Ausgestaltung aus einem anderen Material vorzusehen wie den Grundkörper. Um die Membran entsprechend montieren zu können, ist an dem Grundkörper eine Membranausnehmung oder eine Membranöffnung vorgesehen. Die Membran verschließt die Öffnung, da die Membran ja als Dichtfläche zwischen dem druckbeaufschlagten und dem unter normalen Druck stehenden Raum gilt. Die Anordnung kann aber auch so gewählt werden, daß eine Membranausnehmung in dem Grundkörper vorgesehen ist und diese durch die Membran geschlossen wird. In diesem Fall würde zum Beispiel die Membran von der mit Druck beaufschlagten Seite her montiert werden, in dem durch die Membran verdeckten Bereich würde dann zum Beispiel die Auswertelektronik angeordnet sein.

Günstigerweise ist vorgesehen, daß der Drucksensor Kontaktleitungen zur Verbindung der Meßeinrichtung mit einem Anschlußbereich oder einer Auswerteinheit aufweist. Die von der Meßeinrichtung aufgenommenen Informationen werden durch die Kontaktleitungen nach außen gegeben. Es ist zum Beispiel vorgesehen, daß der Drucksensor auch gleich eine Auswerteinheit umfaßt oder aber nur einen Anschlußbereich, zum Beispiel Steckkontakte und so weiter vorgesehen sind und die Auswerteinheit vom Sensor entfernt vorgesehen ist. Natürlich ist vorgesehen, daß auch eine Auswerteinheit dann einen Anschlußbereich aufweist, um die ermittelten Daten entsprechend weiterzuleiten.

Günstigerweise ist vorgesehen, daß die Kontaktleitung auf der dem Druckraum abgewandten Seite vorgesehen ist. Gemäß der Erfindung ist vorgesehen, daß zumindest eine Kontaktleitung vorgesehen ist, günstigerweise werden aber mehrere, zum Beispiel vier Kontaktleitungen parallel angeordnet. Durch die vorgeschlagene Position werden die Kontaktleitungen durch die Membran vor dem im Druckraum herrschenden Druck geschützt. Die Kontaktleitung kann dabei zum Beispiel kabelartig oder drahtartig ausgebildet sein oder aber die Kontaktleitung ist als Leiterbahn zum Beispiel in Dünnschichttechnologie ausgeführt.

Von erheblichem Vorteil ist, daß die Membran Teil eines Membranhalters ist und der Membranhalter insbesondere in die Membranausnehmung und/oder Membranöffnung des Grundkörpers eingesetzt ist. Die Handhabung bei einer solchen erfindungsgemäßen Variante wird erleichtert, da der Membranhalter nur in einem gewissen Bereich die empfindliche Membran trägt. Da die Membrane eine gewisse Beweglichkeit aufzuweisen hat, wird dabei zumindest nur der Membranbereich tatsächlich dem Druck ausgesetzt, der übrige Membranhalter ist zum Beispiel satt, bettartig (zum Beispiel in die Montageausnehmung) in den Grundkörper eingebettet, wobei die Ausgestaltung im Grundkörper so getroffen ist, daß der Membran ein sicheres Auflager geboten ist und auch nur der Bereich des Membranhalters als Membran wirkt, der auch mit der entsprechenden Meßeinrichtung zusammenwirkt. Es muß dabei nicht zwingend eine Membranausnehmung vorgesehen sein, sie erleichtert aber die Führung beziehungsweise Montage.

Geschickterweise ist die Anordnung in einer erfindungsgemäßen Variante so gewählt, daß der Membranhalter Kontaktleitungen trägt. Der Membranhalter umfaßt dabei zum einen die Membran, zum anderen übernimmt der Membranhalter die Aufgabe, die Membran an der geeigneten Stelle zu positionieren und zu halten. Des Weiteren übernimmt der Membranhalter auch die Aufgabe, Kontaktleitungen vorzusehen, mit der die Meßeinrichtung mit der entfernt von der Membran angeordneten Auswerteinheit und so weiter verbunden wird. Der Grundkörper ist, wie bereits beschrieben, deutlich größer, da er auch eine Gehäusefunktion für den Sensor erfüllt. Der Herstellprozeß verbilligt sich erheblich, wenn nicht der gesamte Drucksensor, zum Beispiel in einem Dünnschichtbeschichtungsverfahren mit den Kontaktleitungen ausgestattet wird, sondern nur der Membranhalter. Das Beschichten des großvolumingen Drucksensors nur in einem gewissen Bereich wäre aufwendig, das Beschichten nur des Membranhalters mit den Kontaktleitungen und der Meßeinrichtung hingegen, führt zu einer sehr hohen Effizienz und zu einer deutlich besseren Auslastung dieser aufwendigen Beschichtungsanlagen.

Darüberhinaus erlaubt der mehrteilige Aufbau, daß die Membran beziehungsweise der Membranhalter sowie der Grundkörper bezüglich ihrer jeweiligen Funktionen und Eigenschaften optimiert werden können.

Geschickterweise ist der Membranhalter länglich ausgebildet und die Kontaktleitungen verlaufen bevorzugt parallel zu dieser länglichen Erstreckung. Dies führt dazu, daß das Anhaften von entsprechenden Drähten oder Kabeln zum Weiterleiten der Informationen nicht im vorderen Bereich, in welchem die Membran angeordnet ist, erfolgen muß, da dort unter Umständen während des Betriebes erhebliche Temperaturspitzen auftreten, die die Kabelverbindung unter Umständen schädigen könnten.

In einem gewissen Abstand von der Membran besteht aber bereits ein gewisses Temperaturgefälle, welches bei den bekannten Verbindungstechniken (Bonding-Verfahren) bereits hilft, um eine stabile, zuverlässige elektrische Verbindung dauerhaft herzustellen.

Es ist beschrieben worden, daß die Membran in den Grundkörper dicht verbunden wird, zum Beispiel verschweißt wird. Hierzu werden zum Beispiel entsprechende Laserschweißverfahren eingesetzt, die es erlauben, auch sehr filigrane Verschweißungen auszuführen. Es ist zu beachten, daß die Membrane doch eine gewisse Flexibilität aufzuweisen hat und der Schweißprozeß die Funktionalität der Membran nicht beeinträchtigen oder vernichten soll.

Der Drucksensor besteht in einer anderen Variante aus einem Grundkörper, an dem die Membran einstückig angeschlossen beziehungsweise ausgebildet ist. Die Membran wird dabei durch eine Materialschwächung des Grundkörpers an geeigneter Stelle gewonnen. Der Vorteil liegt bei dieser Variante gerade darin, daß auf ein separates Bauteil als Membran verzichtet wird und der Grundkörper so gestaltet wird, daß ein Teil des Grundkörpers als Membran dient. Dies kann durch entsprechende spanabhebende oder materialablösende Bearbeitung problemlos erreicht werden. Bei dieser Variante erspart man sich aufwendige Montage- und Verbundtechniken. Auch ist die einstückige Ausgestaltung von vornherein dicht und es müssen hier keine zusätzlichen Anstrengungen unternommen werden.

Da vorgeschlagen wird, daß der erfindungsgemäße Drucksensor einfach in eine Bohrung der den Druckraum begrenzenden Wandung eingesetzt wird, ist der Drucksensor beliebig einsetzbar. Gemäß der Erfindung sind dabei mehrere Varianten denkbar, wie der Grundkörper gemäß der Erfindung in die den Druckraum begrenzende Wand eingesetzt wird. Bei der ersten Variante besitzt der Grundkörper ein Gewinde, welches in einer Bohrung der Wand eindrehbar ist. Der Grundkörper besitzt dabei günstigerweise ein entsprechendes Außengewinde. Die Wandbohrung mag dabei entweder eine Durchbohrung oder eine Sackbohrung mit sich anschließender Öffnung zum Druckraum sein. Diese Variante hat den Vorteil, daß ein hierin einzusetzender Drucksensor aus einer sehr geringen Anzahl von einzelnen Bauteilen besteht.

In einer anderen Variante ist es von Vorteil, daß der Grundkörper mittelbar in die den Grundkörper begrenzende Wand eingesetzt wird und zwar mit Hilfe einer den Grundkörper aufnehmenden Hülse. Die Hülse besitzt dabei ein Innen- und ein Außengewinde. Mit dem Außengewinde ist die Hülse in der Bohrung, dies kann wiederum eine Durchbohrung oder eine Sackbohrung sein, eindrehbar und mit dem Innengewinden wird der Grundkörper mit der Hülse verbunden.

In einer weiteren, Ausgestaltung der Erfindung ist vorgesehen, daß die Membran einstückig aus dem Grundkörper herausgearbeitet ist. Nach wie vor ist auch die Membran ein filigranes Bauteil. Die Qualität der Membran definiert letztendlich die Qualität des Drucksensors. Es ist aber gefunden worden, daß sich eine gleiche Qualität der Drucksensoren realisieren läßt, wenn die Membran einstückig aus dem Grundkörper herausgearbeitet ist. Der Vorschlag spart aufwendige Montagearbeiten der Membran an dem Membranträger ein. Für das Herausarbeiten der Membran durch entsprechende Materialschwächungen des Grundkörpers bestehen zerspanende oder materialablösende Bearbeitungsverfahren, die eine ausreichend hohe Qualität und Reproduzierbarkeit sicherstellen. Neben den normalen, bekannten zerspanenden Bearbeitungstechniken sind dabei auch entsprechende Laserbearbeitungen oder Laserschneidverfahren bekannt und einsetzbar.

In einer bevorzugten Variante der Erfindung ist vorgesehen, daß das Gewinde im hinteren Bereich des Grundkörpers angeordnet ist. Die Ortsangabe hinten bezieht sich dabei auf die Einbaurichtung. Vorne ist in diesem Zusammenhang der Bereich des Drucksensors, in welchem die Membran angeordnet ist. Es reicht dabei völlig aus, nur einen Teil des Grundkörpers mit einem Gewinde auszustatten und dieses entsprechend fest in der Wand einzudrehen und zu befestigen.

Des Weiteren sieht die Erfindung vor, daß der Drucksensor in einer Sackbohrung der Wand eingesetzt ist und im Boden der Sackbohrung eine Öffnung zum Druckraum vorgesehen ist. Eine solche Ausgestaltung ist dahingehend günstig, daß der Boden der Sackbohrung für Abdichtungszwecke verwendet wird.

Soweit nachfolgend von einer Sackbohrung oder Sacklochbohrung in der den Druckraum begrenzenden Wand gesprochen wird, ist darunter immer eine sacklochartige Bohrung mit Öffnung im Boden gemeint.

In einer bevorzugten Variante der Erfindung ist vorgesehen, daß sich der Grundkörper von hinten nach vorne verjüngt. Die Anordnung ist dabei so gewählt, daß der Durchmesser des Grundkörpers im hinteren Bereich, in welchem das Gewinde angeordnet ist, größer ist als im vorderen Bereich, in welchem sich die Membran befindet. Die Ausgestaltung ist insofern geschickt, als das sich die verjüngende Ausführung des Grundkörpers, der Sackbohrung und der Wand, in welcher der Drucksensor eingesetzt, zum Beispiel eingedreht wird, derart zusammenwirkt, daß nur eine verhältnismäßig kleine Öffnung zur Verfügung gestellt werden muß, um eine Verbindung des Drucksensors mit dem Druckraum herzustellen.

In einer bevorzugten Variante der Erfindung ist vorgesehen, daß der Grundkörper aus mehreren, miteinander fest verbindbaren Einzelteilen besteht.

Der Grundkörper ist in einer ersten Variante einteilig geschaffen und zum Beispiel in einem spanabhebenden Prozeß aus einem Metallstück gewonnen. Es ist aber unter Umständen auch günstig, Einbauten vorzunehmen, die dann entsprechend von äußeren Gehäuseteilen geschützt sind. Dies führt dazu, daß der Grundkörper aus mehreren Einzelteilen besteht, die dann fest miteinander verbunden werden, zum Beispiel verschweißt oder verklebt werden. Es können dabei die gleichen Verbindungstechniken eingesetzt werden, wie bei dem Verbinden des Membranhalters mit dem Grundkörper.

Günstigerweise wird die Öffnung und die Sackbohrung koaxial ausgeführt. Auf die genaue Lage des Drucksensors in der Sackbohrung kommt es dabei nicht an, da der Drucksensor immer gleich optimal zur Öffnung orientiert ist.

Günstigerweise ist eine Dichtung zwischen dem Drucksensor und dem Boden der Sackbohrung angeordnet. Die Dichtung dichtet natürlich auch die Membranseiten voneinander ab. Die Dichtung ist dabei scheiben- sondern ringförmig ausgebildet und weist günstigerweise einen Durchbruch auf. Durch den Durchbruch besteht eine Verbindung zwischen der Sackbohrung und dem Druckraum.

Es ist gefunden worden, daß es von Vorteil ist, wenn der Drucksensor einen Abstützrand aufweist, der im Bereich der Membran angeordnet ist und im eingebauten Zustand mit der Dichtung zusammenwirkt. Der Abstützrand dient in dieser erfindungsgemäßen Variante zur Verbesserung der mechanischen Stabilität der Membran. Er dient auch dazu, daß die Membran besser und zuverlässiger an der Dichtung abdichtbar ist, da der Abstützrand eine gewisse Breite aufweist. Günstigerweise ist dabei der Abstützrand ebenfalls einstückig aus dem Grundkörper herausgearbeitet. Dies ist durch entsprechende hochgenaue, mechanische Bearbeitung möglich.

Für die Ausgestaltung des Abstützrandes bieten sich mehrere Varianten an. Diese kann sich zum Beispiel stegartig erstrecken oder aber auch scheibenartig ausgebildet sein und an dem Zylinderrand der Bohrung anliegen. Diese scheibenartige oder halbscheibenartige Ausgestaltung hat weiterhin den Vorteil, daß eine verhältnismäßig große Dichtfläche zur Verfügung steht, die mit der Dichtung zusammenzuwirken vermag.

Des Weiteren hat der Abstützrand in einer weiteren erfindungsgemäßen Variante die Aufgabe, die Membran gegen die Zylinderwand der Bohrung abzustützen. In einer ersten Variante der Erfindung ist vorgesehen, daß die Membran gegebenenfalls frei hervorkragend am Grundkörper angeordnet ist. In einer Verbesserung dieser Ausgestaltung ist vorgesehen, daß die Membran zumindest an zwei Seiten gefaßt ist, nämlich an der einen Seite am Grundkörper angeschlossen ist und an der anderen Seite den Abstützrand trägt, der die Membran bevorzugt gegen die Zylinderwand der Bohrung oder auch den Boden der Sackbohrung abstützt. Die mechanische Stabilität der Anordnung wird dabei erhöht.

In einer weiteren Variante der Erfindung ist vorgesehen, daß das vordere Ende des Drucksensors einen Dichtsitz, insbesondere einen kegelartigen Dichtsitz aufweist, und der Dichtsitz mit der die Öffnung umgebenden Wand zusammenwirkt.

Die Aufgabe des Dichtsitzes ist mit der Aufgabe des vorbeschriebenen Abstützrandes sehr ähnlich oder fast identisch. Der Dichtsitz ist dabei so ausgebildet, daß dieser ohne zusätzliche mechanische Dichtung abdichtet. Entsprechende Kegelsitze sind hierzu bekannt. Die vorgenannten Vorzüge bei der beschriebenen Ausgestaltung mit dem Abstützrand sind in gleicher Weise auf diese hier beschriebene Ausgestaltung mit dem Dichtsitz übertragbar.

Des Weiteren ist in einer erfindungsgemäßen Variante vorgesehen, daß die Öffnung der Wand, der Durchbruch in der Dichtung und die Sackbohrung in der Wand koaxial sind. Auf eine genaue radiale Ausrichtung von Dichtung und Drucksensor in der Bohrung kommt es dabei nicht mehr an.

In einer bevorzugten Ausgestaltung der Erfindung ist vorgesehen, daß der Drucksensor an seinem, den Druckraum zugewandten Ende beziehungsweise Stirnseite eine bevorzugt sacklochartige Ausnehmung aufweist, und diese Ausnehmung einer Materialschwächung zur Bildung der Membran zumindest mit dient.

Bevorzugterweise ist der Grundkörper bolzenartig ausgebildet. Diese sacklochartige Ausnehmung dient dazu in den Grundkörper eine Materialschwächung einzubringen und so eine Wandung des Grundkörpers zu schaffen, die als Membran dient. Dabei mag diese Maßnahme allein bereits zur Bildung der Membran ausreichen, es ist aber auch günstig, gegebenenfalls diese Ausnehmung mit einer weiteren Maßnahme zu kombinieren.

In einer Variante der Erfindung wird vorgeschlagen, daß der Grundkörper an seinem, dem Druckraum zugewandten Ende eine bevorzugt sacklochartige Ausnehmung aufweist. Diese sacklochartige Ausnehmung verbindet den Druckraum mit der dem Druck zugewandten Seite der Membran.

In einer Weiterentwicklung wird vorgeschlagen, daß diese Ausnehmung für eine Materialschwächung zur Bildung der Membran zumindest mitdient. Insbesondere bei der einstückigen Ausgestaltung ist es möglich, durch entsprechende Ausgestaltung der Sacklochbohrung, gerade in dem interessierenden Bereich die Membran auszugestalten.

Die Anordnung der Membran in der sacklockartigen Ausnehmung hat den erheblichen Vorteil, daß die Membran somit vor Beschädigungen gut geschützt ist, trotzdem aber Verbindung zum Druckraum besteht.

Des Weiteren ist vorgesehen, daß der Grundkörper in dem dem Druckraum zugewandten Bereich eine Abflachung aufweist. Üblicherweise ist der Grundkörper als Drehteil zum Beispiel rohrartig oder bolzenartig (auch mit Absätzen, Vorsprüngen und so weiter) ausgebildet und besitzt eine sphärische Mantelfläche. Die Abflachung erreicht, daß der Grundkörper abschnittsweise eben ausgebildet ist, was zum einen den Einbau erleichtert, da die auf der Abflachung angeordneten Elemente, zum Beispiel die Kontaktleitungen, beim Einbauen nicht beschädigt werden. Sie stehen gegenüber einer Hülse, in welche der Grundkörper eingeschoben wird, bereits entsprechend zurück und sind dadurch geschützt. Des Weiteren wird vorgeschlagen, daß die Abflachung als eine Materialschwächung zur Bildung der Membran zumindest mitdient.

Natürlich ist es möglich, daß an dem Grundkörper auch mehrere Abflachungen vorgesehen sind, wobei zum Beispiel die Abflachungen so ausgestaltet sein können, daß eine Lippe oder Membranplatte stehen bleibt. Es ist aber auch möglich, diese Abflachung mit der Ausnehmung zu kombinieren und den sich ausbildenden schmalen Steg zwischen der Abflachung und der Ausnehmung als Membran zu nutzen.

Günstig ist es, daß die Abflachung die Kontaktleitung/en trägt. Die Kontaktleitung/en wird/werden in einer noch zitierten Weise zum Beispiel in Dünnschichttechnologie aufgetragen. Die Abflachung führt zu einer geraden Fläche auf dem Grundkörper, der zum Beispiel das Auftragen der Dünnschicht erleichtert, da das Beschichten, insbesondere beim Einsatz von Masken, exakter und genauer auf planen Oberflächen erfolgt.

Für die Orientierung der Membran bestehen dabei auch mehrere Varianten. Zunächst ist es gemäß einer Variante der Erfindung vorgesehen, daß sich die Membran im Wesentlichen parallel zur Achse der Bohrung (der Flächennormalen) erstreckt. Dies ist insbesondere dann der Fall, wenn eine entsprechende Ausnehmung zur Bildung der Materialschwächung vorgesehen ist, die in Achsrichtung in den Grundkörper eingearbeitet ist. Hierauf ist die Erfindung aber nicht festgelegt. Es besteht auch die Möglichkeit, daß sich die Membran im Wesentlichen rechtwinklig zur Achse der Bohrung erstreckt. Natürlich sind von der Erfindung auch Lösungen umfaßt, bei welchen die Membran bezüglich der Achse der Bohrung beliebige Winkel einschließt.

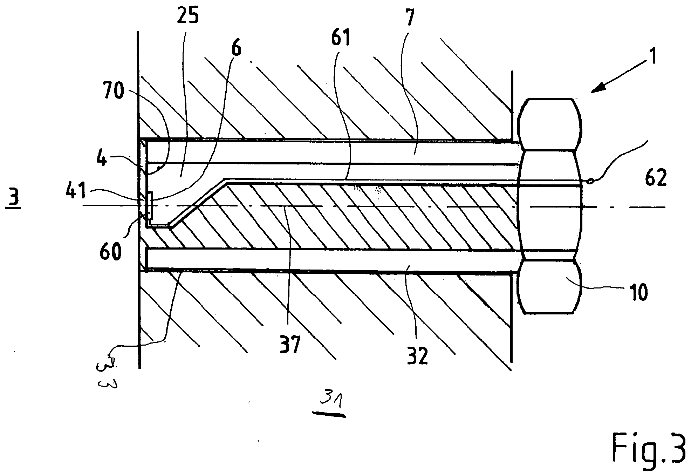

In einer weiteren Variante der Erfindung ist vorgesehen, daß die Membran scheibenartig ausgebildet ist. Eine solche Ausgestaltung ist durch den Einsatz einer Materialschwächung an dem Grundkörper realisierbar. Zum Beispiel wird hierzu die Membran durch eine Hinterfräsung des Grundkörpers gewonnen. Durch entsprechende, zum Beispiel auch in Fig. 3 gezeigte Ausgestaltung ist es möglich, eine Membranplatte zu realisieren.

In einer bevorzugten Variante der Erfindung ist vorgesehen, daß der Grundkörper eine Hülse trägt und die Hülse in einer Bohrung dicht mit der Wand verbindbar, insbesondere einschraubbar ist.

Die Hülse dient dabei auch dazu, die Membran mechanisch zu unterstützen, derart, daß sich die Membran zumindest auf einem Teil des Hülsenrandes abstützt.

Günstigerweise wird vorgeschlagen, daß der Grundkörper an seinem, dem Druckraum abgewandten Ende eine Endöffnung aufweist, welche die Auswerteinheit und/oder den Anschlußbereich aufnimmt. Im Bereich der Endöffnung ist zum Beispiel auch das Gewinde zum Befestigen des Grundkörpers in der Wand vorgesehen. Dieser Bereich des Grundkörpers ist verhältnismäßig breit, da er sich nach vorne in Richtung der Membran günstigerweise verjüngt. Da die Auswerteinheit beziehungsweise der Anschlußbereich eine gewisse Ausdehnung besitzt, ist es günstig, diese Elemente in einer endseitig vorgesehenen Endöffnung einzubauen, wodurch der Grundkörper diese Elemente gehäuseartig schützt.

Geschickterweise ist dabei die Auswerteinheit auf einer Platine angeordnet und in der Endöffnung sind Führungsnuten zur Aufnahme der Platine vorgesehen.

Durch die Anordnung von Führungsnuten ist die Platine sicher geführt. Geschickterweise sind die Führungsnuten parallel zur Längsachse des Grundkörpers orientiert und diametral angeordnet, um die maximale Weite des Grundkörpers auszunutzen. Man schafft dadurch ausreichend Platz für die Realisierung der Auswerteinheit auf der Platine. Dabei kann die Platine auch eigenständige, zusätzliche Anschlüsse aufweisen, um zum Beispiel entsprechende Steuerleitungen anschließen zu können. Die Platine umfaßt also auch einen Anschlußbereich. Die Ausgestaltung mit Führungsnuten hat auch bezüglich der Temperaturübertragung Vorteile, da dadurch einen relativ geringen mechanischen Kontakt nur ein geringen Wärmestrom in die Platine stattfindet. Die Führungsnuten bilden nur eine geringe beziehungsweise kleine Wärmebrücke aus.

In einer weiteren Variante der Erfindung wird vorgeschlagen, daß die Kontaktleitungen zumindest an ihrer der Membran abgewandten Seite Kontaktflächen aufweist, um ein Anhaften von Verbindungsleitungen zur Auswerteinheit zu ermöglichen. Das Anhaften von Verbindungsleitungen erfolgt zum Beispiel durch entsprechende Verbindungsverfahren wie das Bonden oder Löten. Dabei entsteht eine auch in Grenzen mechanisch belastbare, elektrisch leitende Verbindung. Wird aber eine entsprechend größere Kontaktfläche zur Verfügung gestellt, kann das Verbinden leichter und zuverlässiger erfolgen.

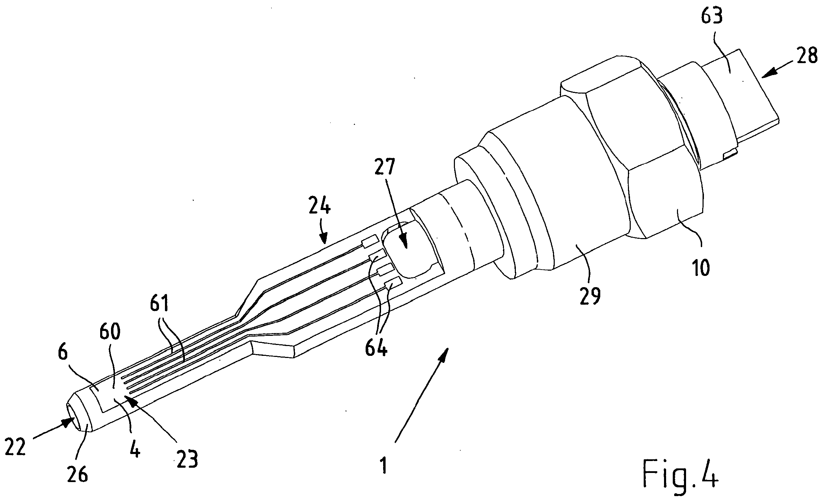

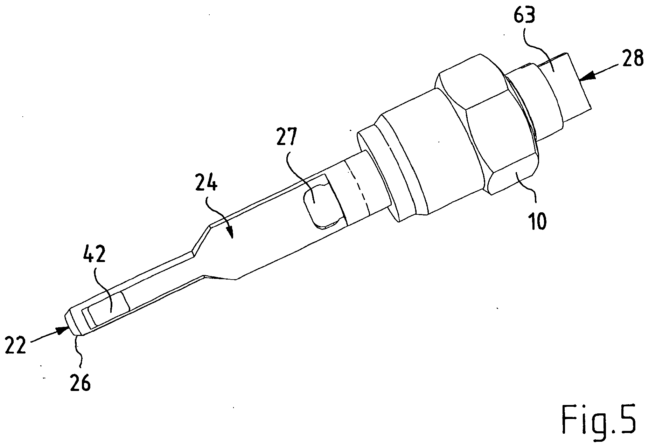

Es ist von Vorteil, daß in einer weiteren, erfindungsgemäßen Variante die Abflachung an ihrem der Membran abgewandten Ende einen Druchbruch zur Endöffnung besitzt. Diese Variante ist insbesondere in der Fig. 4, 5 (Bezugsziffer 27) gut zu sehen. Durch diese Ausgestaltung wird erreicht, daß der wiederum sensible Anschlußbereich der bevorzugten Endöffnung eingebaut ist und von dem rückseitigen Teil des Grundkörpers geschützt ist. Die Abflachung, die auf der Außenseite angeordnet ist, wird durch den vorgeschlagenen Durchbruch mit der Endöffnung entsprechend verbunden, um hier insbesondere Verbindungsleitungen anordnen zu können. Geschickterweise wird dann über die gesamte Anordnung eine, auch die Abflachung verdeckende Hülse geschoben, und so die gesamte Anordnung geschützt.

Gemäß der Erfindung ist vorgesehen, daß die Meßeinrichtung resistiv, kapazitiv oder induktiv wirkend ausgebildet ist. Die Anordnung ist so gewählt, daß die druckbedingte Membranverformung den Widerstand, die Kapazität oder die Induktivität eines entsprechenden Bauteils verändert und diese Parameter erfaßt und zur Druckmessung ausgewertet werden. Eine bevorzugte Anordnung ist zum Beispiel durch die Ausgestaltung der Meßeinrichtung als ein auf der Membran angeordneter Dehnmeßstreifen angegeben. Eine solche Anordnung ist zum Beispiel ein Vorschlag für eine resistive oder auch kapazitive Ausgestaltung der Meßeinrichtung, bei der gegebenenfalls auch eine Wheatstonesche Brückenschaltung Verwendung finden kann. Zusätzlich wird allerdings vorgeschlagen, an oder auf der Membran einen Temperatursensor anzuordnen. Es werden dann zum Beispiel fünf oder sechs Kontaktleitungen vorgesehen, eine oder zwei für den Temperatursensor. Mit den Temperatursensoren können wärmebedingte Auslenkungen der Membran, zum Beispiel in der Auswerteinheit, herausgerechnet werden. Aber auch die Temperaturinformation ist als Auswertergebnis interessant.

Für eine hohe Qualität der Druckmessung hat es sich als vorteilhaft herausgebildet, daß die Meßeinrichtung in einer Dünnschichttechnologie auf die Membran aufgetragen ist. Solche allgemein auch als Epitaxie- oder Sputterverfahren bekannte Beschichtungsverfahren erlauben es, dünne Schichten unterschiedlichster Materialien mit unterschiedlichsten physikalischen Eigenschaften auf Substraten aufzutragen und entsprechende Bauteile zu realisieren. Zum Beispiel wird ein resistiver oder kapazitiver Dehnmeßstreifen in einem Dünnschichtbeschichtungsverfahren auf die dem Druckraum abgewandte Membranseite aufgetragen und die druckbedingte Membranverformung durch den Dehnmeßstreifen entsprechend elektronisch ausgewertet und verarbeitet.

In einer weiteren erfindungsgemäßen Variante ist vorgesehen, daß auf dem Grundkörper Kontaktleitungen für den elektrischen Anschluß der Meßeinrichtung vorgesehen sind. Geschickterweise wird auch die Kontaktleitung in Dünnschichttechnologie aufgebaut.

Da sowohl die Kontaktleitungen wie auch der Dehnmeßstreifen elektrischen Strom leiten, ist es zunächst von Vorteil, auf den Grundkörper, wenn dieser ebenfalls elektrisch leitend ist, eine isolierende Schicht aufzutragen. Auch dies kann in Dünnschichttechnologie erfolgen, es wird zum Beispiel zunächst eine Saphierschicht aufgetragen. Auf dieser isolierenden Schicht werden dann auch bevorzugt in Dünnschichttechnologie die Kontaktleitungen aufgetragen, wie auch die Meßeinrichtung realisiert. Der Vorteil dieser Ausgestaltung ist, daß die in Dünnschichttechnologie realisierten Leitungen insbesondere für Einsatzbereiche des Drucksensors, wo hohe Temperaturen herrschen, zuverlässig arbeiten. Sonst bekannte Lotverbindungen für das Ankontaktieren von Kontaktleitungen an die Meßeinrichtung sind nicht ausreichend temperaturstabil und daher auch nicht zuverlässig.

Insbesondere die Variante der Erfindung, nach welcher der Membranhalter längs der Längserstreckung des Grundkörpers anordnet ist und im Verhältnis zum vorderen Ende des Grundkörpers lang ist, ergibt, daß sich der Membranhalter vom vorderen Ende des Grundkörpers über einen weiten Bereich nach hinten, weg von dem vorderen, den Membran haltenden Teil, am Grundkörper erstreckt. Trägt nun der Membranhalter auch gleichzeitig die Kontaktleitungen, wie vorteilhafterweise ebenfalls erwähnt, so wird mit solch einer Variante erreicht, daß erst in großer Entfernung von dem heißen Druckraum eine Verbindungsleitung angebondet werden muß. In diesem Bereich herrschen bereits niedrigere Temperaturen, so daß die gewählten Verbindungstechniken bei den dort herrschenden Temperaturen sicher eingesetzt werden können. Dabei ist zu beachten, daß natürlich der Drucksensor, wenn er zum Beispiel in einem Zylinder oder Zylinderkopf Verwendung findet, durch die am Zylinderkopf vorgesehene Kühlung entsprechend gekühlt wird.

Das angegebene Längenverhältnis ist dabei so gewählt, daß der Membranhalter mindestens die Länge der Breite des vorderen Endes des Grundkörpers aufweist und sich bis ca. im Faktor 10 bis 15 hiervon erstreckt. Es können aber auch noch größere Verhältnisse erreicht werden, die ebenfalls zur Erfindung zählen.

Dabei ist vorgesehen, daß an dem dem Druckraum abgewandten Ende des Grundkörpers die Kontaktleitungen in einem Anschluß enden und an dem Anschluß zum Beispiel ein herkömmliches Kabel und dergeichen anschließbar ist. Die Anordnung des Anschlußes an dem dem Druckraum abgewandten Ende bereitet in der Regel keine thermischen Probleme mehr, da dieser Anschluß relativ weit von der Stelle entfernt ist, an welcher der Druck gemessen wird und wo gegebenenfalls auch entsprechende Temperaturen entstehen oder auftreten.

Es wird vorgeschlagen, daß der Grundkörper beziehungsweise die Membran aus Metall oder Sintermaterialien wie Keramik und dergleichen besteht. Grundkörper und Membran müssen dabei nicht zwingenderweise exakt aus dem gleichen Material bestehen, sie können für die jeweiligen Aufgaben durch ihre spezielle Materialwahl optimiert werden. Es ist auch möglich, zum Beispiel Sintermaterialien wie Keramiken bei dem Membran zu verwenden und diese Membran in einem aus Metall geschaffenen Grundkörper einzubauen. Auch eine umgekehrte Vorgehensweise ist denkbar.

In einer bevorzugten Variante der Erfindung wird vorgeschlagen, daß die Ausnehmung einen Glühstift aufnimmt. Die Ausnehmung ist gemäß dem Vorgesagten am vorderen Ende des Grundkörpers angeordnet und steht in Kontakt mit dem Druckraum. Durch die Ausnehmung gewinnt die Membran Kontakt zum Druckraum, um dessen Druck zu messen.

Der Glühstift ist dabei Teil einer als Glühstiftkerze oder Glühkerze bekannten Anordnung, die zum Beispiel für das Starten von Dieselmotoren eingesetzt wird. Die Aufgabe der Glühkerze besteht darin, daß Dieselöl-Luft-Gemisch in möglichst kurzer Zeit auf eine Temperatur von ca. 850 °C zu erwärmen.

Die für die Druckmessung sowieso vorhandene Öffnung wird durch den erfindungsgemäßen Vorschlag nunmehr geschickterweise ein weiteres mal genutzt. Die Integration eines Glühstiftes in dem Drucksensor schafft aus dem Drucksensor einen kombinierten Drucksensor mit Glühkerzenfunktion. Die sowieso vorgesehene Öffnung in der Wandung des Druckraumes (zum Beispiel des Motorraumes) erfährt durch diese erfindungsgemäße Weiterentwicklung einen erheblichen Vorteil, da diese eine Öffnung nun einen doppelten Nutzen hat. Dabei stören die beiden Anwendungen einander nicht, da die Glühkerze in der Regel in der Startphase des Motors eingesetzt wird, der Drucksensor aber die Druckverhältnisse beim laufenden Motor überwachen soll. Die beiden Anwendungen überdecken sich nur in einem Randbereich und selbst das ist nicht schädlich.

Die erfindungsgemäße Ausgestaltung des Drucksensors dahingehend, daß eine längliche Ausbildung der Membran, möglichst parallel zur Längserstreckung des Drucksensors beziehungsweise rechtwinklig zur Flächennormalen der den Drucksensor aufnehmenden Öffnung, ergänzt sich hierbei günstigerweise, wenn die sowieso vorhandene Öffnung dann mit dem Glühstift zusätzlich genützt wird. Die Membran ist so angeordnet, daß der Einsatz des Glühstiftes nicht behindert wird, obwohl die Platzbedingungen zum Beispiel im Zylinderkopf äußerst gering und eng sind. Die Anordnung ist daher auch zum Beispiel für Nachrüstzwecke einsetzbar, bei welchen zum Beispiel die Glühkerze im Sinne eines Drucksensors wie beschrieben modifiziert wird. Dadurch kann, ohne zusätzliche Öffnungen im Motor anzubringen, dieser für die Druckmessung mit den erfindungsgemäßen Drucksensoren nachgerüstet werden.

Gemäß der Erfindung ist es vorteilhaft, daß der Glühstift von der Innenwand der Ausnehmung beziehungsweise der Membran beabstandet ist. Die Anordnung ist dabei so gewählt, daß ein gewisser ring- oder hülsenartiger Raum zwischen dem Glühstift und der Innenwand der Ausnehmung verbleibt, um die Druckmessung durch die Membran nicht zu behindern.

Dabei ist die Anordnung geschickterweise so gewählt, daß der Glühstift die Ausnehmung nicht verschließt und über den Rand der Ausnehmung nach vorne vorsteht. Eine solche Anordnung ist günstig, da der Glühstift sowieso ein möglichst großes Volumen im Motorraum erwärmen soll und eine möglichst zentrale Anordnung des Glühstiftes diese Aufgabe leichter lösen läßt.

Der Glühstift besteht dabei zum Beispiel aus einem Glührohr, welches Heiz- und Regelwendel aufnimmt. Geschickterweise ist die Anordnung bei der erfindungsgemäßen Weiterentwicklung so gewählt, daß der über den Rand der Ausnehmung, in den Druckraum hineinreichende Bereich des Glühstiftes bei Strombeaufschlagung des Glühstiftes sich aufheizt.

Dabei wird angestrebt, daß sich nur dieser, in den Druckraum hineinstehende Raum erhitzt, daß also nur dort die Glühwendel bei Strombeaufschlagung entsprechend aufheizen, um die verhältnismäßig hohen Temperaturen möglichst nicht direkt auf die Membran wirken zu lassen. Hierbei wirkt wiederum die Ausnehmung, in welche die Membran in der Wandung zum Beispiel eingebaut ist, als Vorteil, da sich die Wandung hier bereits als "Hitzeschild" auswirkt. Die Vorteile gerade dieser Kombination der Aufgaben eines Drucksensors und der Aufgaben einer Glühkerze in dem erfindungsgemäßen Drucksensor sind überraschend und vielfältig, da durch diese Kombination eine in seiner Ausgestaltung de facto beliebig gestaltbare Membrane zur Verfügung steht, die mechanisch gut geschützt in einem Gehäuse, längs zur Gehäuselängsachse beziehungsweise Grundkörperlängsachse, angeordnet ist, die gesamte Anordnung nur eine geringe, kleine Öffnung zum Druckraum benötigt, in der dann noch günstigerweise ein Glühstift integriert werden kann, der die Druckmessung nicht behindert.

Die Erfindung beschränkt sich dabei nicht nur auf einen Drucksensor wie beschrieben, sondern erstreckt sich gleichwohl auf eine Druckerfassungsanordnung, insbesondere für Verbrennungsmotoren. Die Erfindung ist grundsätzlich geeignet zum Beispiel in Verbrennungsmotoren wie Otto- oder Diesel-Motoren eingesetzt zu werden, wobei die Anordnung an beliebiger Stelle im Zylinder oder im Zylinderkopf möglich ist. Natürlich ist es möglich, mehrere Sensoren in einem Zylinder gemäß der Erfindung anzuordnen und somit zum Beispiel eine zeitaufgelöste und ortsaufgelöste Messung des Druckes vorzunehmen. Bei der Anordnung gemäß dem Stand der Technik, die nur in der Zylinderdichtung möglich ist, sind die Einsatzmöglichkeiten deutlich beschränkt.

Die Erfindung ist schematisch in der Zeichnung gezeigt. Es zeigen:
- Fig. 1 und 3: je in einem Schnitt einen Anwendungsfall des Drucksensors;
- Fig. 2: einen vertikalen Schnitt durch den Drucksensor nach Fig. 1 gemäß der Linie II/II;
- Fig. 4, 5, 7, 8: je in einer dreidimensionalen Ansicht weitere Ausgestaltungen des Drucksensors und
- Fig. 6: eine Rückansicht (vergrößert) des Drucksensors nach Fig. 4.

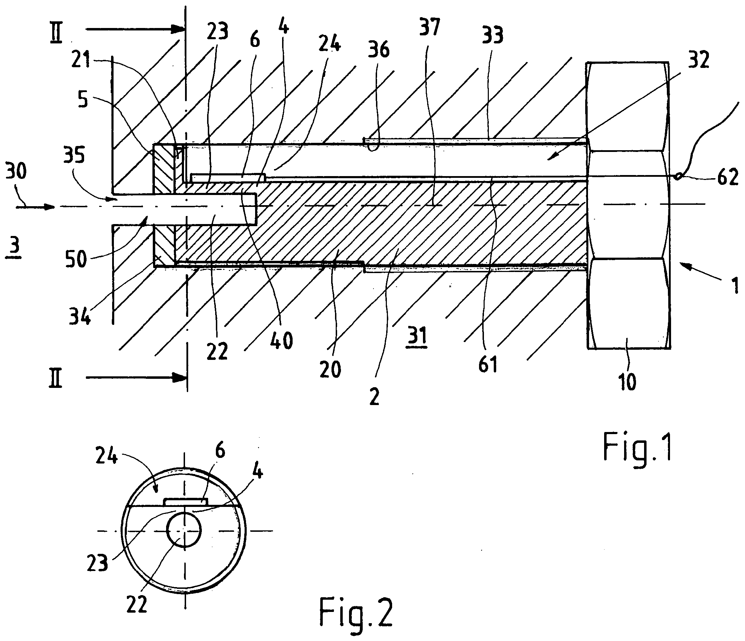

In Fig. 1 ist der erfindungsgemäße Drucksensor 1 schematisch dargestellt. Der Drucksensor 1 besteht aus einem Grundkörper 2, der bolzenartig 20 ausgebildet ist. Der Grundkörper 2 ist zum Beispiel aber auch prismatisch oder zylinderförmig ausgebildet, wobei als Prisma hier all die Geometrien angesehen werden, die axial parallel verlaufende, zueinander parallele Mantellinien besitzen. In dem hier gewählten Ausführungsbeispiel ist der Grundkörper 2 über seine gesamte Länge derart abgeflacht, daß sich insbesondere im vorderen, dem Druckraum 3 zugewandten Bereich ein Abflachung 24 ergibt.

Der Drucksensor 1 wird in einer Wand 31 eingebaut, die den Druckraum 3 umgibt. Der Drucksensor 1 besitzt ein Außengewinde und ist rückseitig mit einem Schraubenkopf 10 oder einer Mutter oder dergleichen ausgestattet. In dem Druckraum 3 herrscht der zu messende Druck 30. Es sind hierbei zwei Varianten denkbar. Zum einen kann der Drucksensor 1 in einer Sackbohrung 32 (gemäß Fig. 1) eingebaut sein, oder aber in einer durchgehenden Bohrung 32 nach Fig. 3.

Bei der Lösung mit einer Sackbohrung 32 ist am Boden 34 der Sackbohrung 32 eine Dichtung 5 angeordnet. Der Drucksensor 1 beziehungsweise der Grundkörper 2 drückt im eingebauten Zustand auf diese Dichtung 5.

Die Membran 4 wird durch eine Materialschwächung 23 gebildet. Diese Materialschwächung 23 des Grundkörpers 2 wird einerseits durch die Abflachung 24 realisiert und andererseits durch eine zum Beispiel sacklochartige Ausnehmung 22, die an der Stirnseite, dem dem Druckraum 3 zugewandten Ende des Grundkörpers 2 in diesem angeordnet ist. Es bildet sich eine stegartige 40 Membran aus. Die Ausnehmung 32 ist auch als Hinterschneidung ausbildbar, wodurch sich zum Beispiel eine freikragende Membranplatte ausbildet.

Die Ausnehmung 22 ist dabei mit dem Druckraum 3 verbunden, derart, daß in der Ausnehmung 22 der gleiche Druck 30 herrscht wie im Druckraum 3. Hierzu ist im Boden 34 der Sackbohrung 32 eine Öffnung 35 vorgesehen. Des Weiteren besitzt auch die Dichtung 5 hier einen Durchbruch 50, die Dichtung 5 ist ring- oder scheibenartig ausgebildet.

Auf der dem Druck 30 abgewandten Seite der Membran 4 ist eine Meßeinrichtung 6 angeordnet. Die Meßeinrichtung 6 dient dazu, die durch den Druck 30 bedingte Membranverformung aufzunehmen und als auswertbares Signal zur Verfügung zu stellen. Hierzu ist die Meßeinrichtung 6 mit Kontaktleitungen 61 verbunden, derart, daß die bevorzugt elektrische Information zum Beispiel einen Spannungsabfall oder dergleichen, je nach Typ der Meßeinrichtung 6, auf die Rückseite geleitet wird, wo die Kontaktleitung 61 in einen Anschluß 62 mündet.

Bevorzugt ist die Meßeinrichtung 6 wie auch die Kontaktleitung 61 in einer Dünnschichttechnologie auf der Abflachung 24 des Grundkörpers 2 aufgetragen.

Als Meßeinrichtung 6 wird bevorzugt ein Dehnmeßstreifen 60 eingesetzt. Es sind hierzu aber auch andere Konzepte bekannt und einsetzbar.

In der Erfindung ist vorgesehen, daß die Membran 4 mit ihrem vorderen, dem Druckraum 3 zugewandten Ende direkt auf die Dichtung 5 wirkt.

In einer verbesserten, weiteren alternativen Ausgestaltung schließt sich an die Membran 4 am vorderen Ende, dem Druckraum 3 zugewandt, ein Abstützrand 21 an, der die Membran mechanisch stabilisiert beziehungsweise an der Zylinderwand 36 abstützt. Zusätzlich wird durch diesen Abstützrand 21 eine verbesserte Abdichtung zwischen der Membran und dem Druckraum 3 hergestellt, da eine erheblich größere Abdichtfläche an dem Abstützrand, wenn dieser zum Beispiel dreisegmentig ausgebildet ist, zum Zusammenwirken mit der Dichtung 5 zur Verfügung gestellt wird.

Gemäß der Erfindung sind aber beide Varianten möglich, also die Anordnung mit oder ohne Abstützrand 21.

Die Membran 4 wird durch eine Materialschwächung 23 in dem dem Druckraum 3 zugewandten Ende des Grundkörpers 2 gewonnen, indem entsprechende Abarbeitungen an dem Grundkörper 2 vorgesehen werden, die zu dieser Materialschwächung führen. Im vorliegenden Fall wird, dem Druckraum 3 zugewandt, eine Ausnehmung 22 vorgesehen, dem Druckraum abgewandt, der Meßeinrichtung 6 zugewandt ist die Abflachung 24 vorgesehen.

Günstigerweise ist die Abflachung 24 über die gesamte Länge des Grundkörpers 2 angeordnet, um das Aufbringen der Kontaktleitungen 61 zu erleichtern.

Die Anordnung ist in Fig. 1 so gewählt, daß sich der Steg 40 der Membran 4 im Wesentlichen parallel zur Achse der Bohrung 37 erstreckt. Für das dichte Verbinden des Grundkörpers 2 mit der Wand 31 dient insbesondere ein Gewinde 33 sowie die Dichtung 5.

Günstigerweise ist die Ausnehmung 22 koaxial zur Öffnung 35 orientiert, wodurch es auf die genaue radiale Anordnung des bolzenartigen Grundkörpers 2 in der Bohrung 32 nicht ankommt. Günstigerweise besitzt die Ausnehmung 22 den gleichen Durchmesser wie die Öffnung 35, es können aber auch unterschiedliche Durchmesser gewählt werden, wenngleich hierbei auf einen möglichen Drosseleffekt Rücksicht genommen werden muß, welcher unter Umständen zu einer Beeinträchtigung des zu messenden Druckes führen kann.

In der in Fig. 3 gezeigten Ausgestaltung ist die Membran 4 scheibenartig 41 ausgebildet. Aber auch hier ist die Membran 4 aus einer Materialschwächung des Grundkörpers 2 gewonnen worden. Es ist hier eine Hinterfräsung 25 vorgesehen, die dazu führt, daß eine scheiben- oder plattenartige Membran 4, 41 besteht. Bei diesem Ausführungsbeispiel ist eine Hülse 7 vorgesehen, die den Grundkörper 2 aufnimmt. Der Grundkörper 2 besitzt wiederum ein Außengewinde, welches mit einem entsprechenden Innengewinde der Hülse 7 zusammenwirkt. Die Anordnung ist dabei so gewählt, daß die Hülse 7 im vorderen, dem Druckraum 3 zugewandten Bereich die Membran 4 unterstützt. Hierzu liegt die scheibenartige 41 Membran auf dem Hülsenrand 70 auf.

Die Hülse ihrerseits besitzt wiederum ein Außengewinde, durch welches der Drucksensor in die Bohrung 32 eindrehbar ist. Durch eine entsprechende Passung ist die Anordnung dicht. In diesem Ausführungsbeispiel ist die Membran rechtwinklig zur Bohrungsachse 37 orientiert. Diese Anordnung kann natürlich in gleicher Weise auch bei einer als Sackbohrung ausgestalteten Bohrung Einsatz finden. Auf der dem Druckraum abgewandten Seite der Membran 4 ist wiederum die Meßeinrichtung 6 angeordnet, die durch die Kontaktleitung 61 zu einem Anschluß elektrisch verbunden ist.

In einer bevorzugten Variante ist der Grundkörper 2 über seine gesamte Länge als abgeflachter Bolzen 20 ausgebildet, der an seinem dem Druckraum 3 abgewandten Ende eine Befestigungsmutter oder einen Schraubenkopf trägt, der dabei so ausgebildet ist, daß durch ihn hindurch die Kontaktierung erfolgt.

In Fig. 4 ist eine verbesserte Ausgestaltung des erfindungsgemäßen Drucksensors gezeigt. Die Anordnung dort, insbesondere im Hinblick auf die Anordnung von der Kontaktleitung 61 und der Membran 4, ist mit den in Fig. 1 beziehungsweise Fig. 2 gezeigten Verhältnissen sehr ähnlich.

Der Drucksensor hat eine Längserstreckung. Der Drucksensor 1 besitzt im rechten Teil von Fig. 4 einen Schrauben- oder Mutternkopf 10, durch welchen der Drucksensor 1 mit Hilfe des Gewindes 29, das sich links vor dem Schrauben- oder Mutternkopf 10 befindet, in ein entsprechendes Gewinde der Öffnung des Druckraumes (hier nicht gezeigt) eindrehen läßt. In diesem Bereich hat der Drucksensor 1 auch seine größte Breite, nach vorne, in Richtung der Membran 4 (am linken Ende gezeigt), verjüngt sich der Drucksensor regelmäßig. Der Drucksensor hat in dieser Ausgestaltung hohe Ähnlichkeit mit einer Zündkerze oder einer Glühkerze.

Am vorderen Ende, da wo der Drucksensor 1 seinen geringsten Durchmesser aufweist, befindet sich die Membran 4, die am vorderen Ende nur noch von dem Dichtsitz 26 gefolgt wird. Der Dichtsitz 26 hat, wie beschrieben, die gleichen Aufgaben wie der Abstützrand 21 nach Fig. 2, der gesamte Drucksensor 1 wird in eine nicht dargestellte (Sackloch-)Bohrung 32 eingebaut und der Dichtsitz 26 wirkt zusammen mit einer Abstufung, dem Boden der Sacklochbohrung. Die Anordnung ist dabei so gewählt, daß die vordere, endseitige Ausnehmung 22 mit der Öffnung 35 in der Wandung fluchtet beziehungsweise kommuniziert und so ein unmittelbarer Zugang zum Volumen des Druckraumes 3 besteht.

Die Unterseite der Membran 4 steht somit in Kontakt mit dem Druck des Druckraumes 3. Auf der hier gezeigten Oberseite, der dem Druck abgewandten Seite, befindet sich auf der Membran 4 die Meßeinrichtung 6, die als Dehnmeßstreifen 60 ausgebildet ist. Insgesamt sind vier Kontaktleitungen 61 vorgesehen, über die entsprechende Spannungsänderungen, aufgrund der veränderten Widerstände der Dehnmeßstreifen, abgreifbar sind. Dies erfolgt zum Beispiel nach einem wheatstoneschen Brückenprinzip. Es ist gezeigt, daß die Kontaktleitungen 61 zunächst parallel verlaufen und sich dann diese, ungefähr im gleichen Bereich, in welchem sich auch der Drucksensor ausweitet, aufspreizen und dann wieder parallel verlaufen, um dann in entsprechende Kontaktflächen 64 zu münden.

Die Kontaktflächen 64 sind fast in der Mitte des Drucksensors 1 angeordnet. Es ist günstig, die Kontaktflächen 64 möglichst weit im hinteren Bereich, welcher regelmäßig kühler ist als der vordere Bereich des Drucksensors, anzuordnen, da auf die Kontaktflächen 64 temperatursensible Kabelverbindungen angebracht werden müssen.

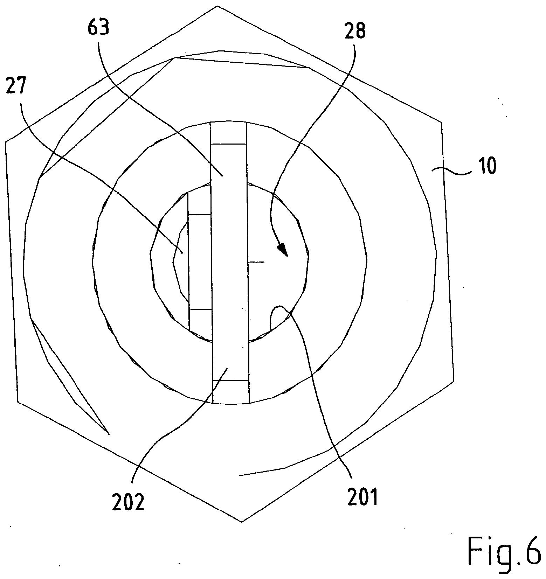

An den Kontaktfläche 64 schließt sich rechts, nach hinten ein Durchbruch 27 an. Dieser Durchbruch 27 verbindet die Oberseite der Abflachung 24 mit dem Inneren der Endöffnung 28. Die Endöffnung 28, vergrößert in Fig. 6 dargestellt, ist zylinderartig aus dem breiten Bereich des Grundkörpers 2 herausgearbeitet, zum Beispiel herausgebohrt.

In Fig. 6 ist die Rückansicht des Drucksensors nach Fig. 4 gezeigt. Die Endöffnung 28 ist dabei so ausgebildet, daß diese geeignet ist, die Platine einer Auswerteinheit 63 aufzunehmen. Hierzu sind zum Beispiel in den Seitenwandungen 201 Nuten 202 eingearbeitet, die als Führung für die Platine der Auswerteinheit 63 dienen.

Durch den Durchbruch 27 können nun entsprechende, nicht dargestellte Verbindungsleitungen die Kontaktfläche 64 mit der Platine der Auswerteinheit 63 verbinden.

Der in Fig. 4 gezeigte, erfindungsgemäße Drucksensor 1 ist zumindest in dem Bereich der Membran einstückig ausgebildet, das heißt, die Membran 4 wurde durch eine entsprechende Verjüngung der Wandstärke geschaffen. Hierzu dient zum einen die Abflachung 24 und zum anderen die Ausnehmung 22, die entsprechend angeordnet zu einer entsprechenden membranartigen Materialschwächung 23 führt. Die Anordnung ist dabei so gewählt, daß der kegelartige Dichtsitz 26 vollständig umlaufend ist, die Abflachung 24 also im vordersten Bereich, im Bereich des Dichtsitzes 26 abgesetzt ist. Diese einstückige Ausgestaltung hat Vorteile bei der Dichtheit der gesamten Anordnung.

Sowohl der Dehnmeßstreifen 60 wie auch die Kontaktleitungen 61, einschließlich der Kontaktflächen 64, sind bevorzugterweise in einem gemeinsamen Dünnschichtbeschichtungsverfahren aufgetragen worden. Dabei wird gegebenenfalls der gesamte Drucksensor entsprechend in eine Beschichtungsanlage eingestellt und die Abflachung 24 wie gewünscht entsprechend beschichtet. Da ein elektrisch leitender Grundkörper zum Beispiel vorgesehen ist, wird dabei zunächst eine entsprechende isolierende Pufferschicht aufgetragen, zum Beispiel beschichtet oder gesputtert, die dann den Dehnmeßstreifen beziehungsweise die Kontaktleitungen aufnimmt.

Als isolierende Stoffe werden dabei zum Beispiel Siliciumdioxyd, Saphir (AL₂O₃) und andere bekannte Isolierstoffe, die einem Beschichtungsverfahren auftragbar sind, eingesetzt. Die Leiterbahnen bestehen günstigerweise aus Metall mit möglichst geringem, spezifischem Widerstand wie zum Beispiel Gold oder dergleichen.

Der in Fig. 5 gezeigte Aufbau ist im Wesentlichen mit dem in Fig. 4 gezeigten Aufbau identisch, weswegen hier auf Wiederholungen verzichtet wird. Die erfindungsgemäße Variante nach Fig. 5 unterscheidet sich zu der in Fig. 4 dadurch, daß die Membran 4 nicht einstückig aus dem Grundkörper 1 herausgearbeitet ist, sondern der Grundkörper 1 eine Membranöffnung 42 im vorderen Bereich besitzt, durch welchen bei nicht eingebauter Membran 4, wie hier dargestellt, Zugang von der Oberseite, der Abflachung 24 in die Ausnehmung 22 besteht.

In die Membranöffnung 42 wird dann eine entsprechende Membran 4 eingebaut. Die Membran 4 besitzt dann zum Beispiel eine verhältnismäßig kurze Kontaktleitung 61 und wird dann zum Beispiel durch entsprechende Kabelverbindungen mit der Auswerteinheit 63 verbunden.

Es ist klar, daß bei dieser erfindungsgemäßen Variante ein viel kleineres Bauteil in der aufwendigen Beschichtungsanlage zu beschichten ist. Die Fläche der durch die Membran 4 zu verschließenden Membranöffnung 42 ist deutlich geringer wie die zu beschichtende Fläche nach Fig. 4, bei welcher ja noch zu berücksichtigen ist, daß der gesamte Drucksensor kostbaren Platz in einer Beschichtungsanlage belegt.

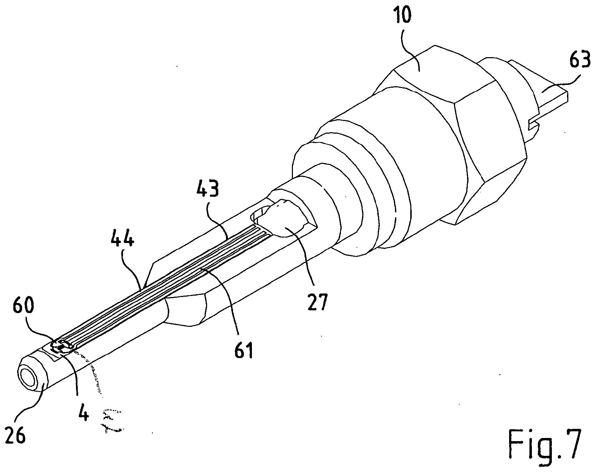

In Fig. 7 ist eine weitere, Variante gezeigt. Die Variante nach Fig. 7 unterscheidet sich zu der nach Fig. 5 dadurch, daß ein deutlich größeres Element in den Drucksensor eingebaut wird. Genauso wie die Variante nach Fig. 5 ist im vorderen Bereich, im Bereich der Membran 4, eine Membranöffnung 42 vorgesehen. An diese schließt sich aber dann in Richtung des Durchbruches 27 eine Membranausnehmung 43 an, die gerade eine solche Tiefe aufweist, wie das Element, welches in diese dort hernach eingelegt wird. Es handelt sich hierbei um den Membranhalter 44. Die Membranausnehmung 43 ist dabei gerade so geschaffen, daß der Membranhalter 44 satt einzuliegen vermag.

Nach einer Variante wird vorgeschlagen, daß der Membranhalter 44 an seinem vorderen Ende die Membran 4 hält. Der Einbau erfolgt natürlich so, daß die gesamte Anordnung dicht ist und die Membran funktionsfähig ist.

In dem hier gezeigten Ausführungsbeispiel trägt der Membranhalter 44 auch gleichzeitig die Kontaktleitungen 61. Diese Variante ist im Hinblick auf die thermischen Randbedingungen sehr günstig, da über einen langen Bereich, fast die Hälfte der gesamten Drucksensorlänge, der Membranhalter 44 sich erstreckt und darauf die Kontaktleitungen 61 angeordnet sind und erst zu einem verhältnismäßig weit innenliegenden, kühleren Ort das Anbonden der Kabel zur Verbindung mit der Auswerteinheit 63 (durch den Durchbruch 27) zu erfolgen hat. Ein verhältnismäßig langer Membranhalter ist natürlich auch, wenn dieser vollständig, das heißt, in seiner gesamten Länge als Kontaktleitung 61 dient, opitmal im Hinblick auf die Ausnutzung der Beschichtungskapazitäten. Denn auch der Membranhalter 44 trägt in Dünnschichttechnologie, wie mehrfach bereits beschrieben, die Kontaktleitungen 61 wie auch die Meßeinrichtung 6.

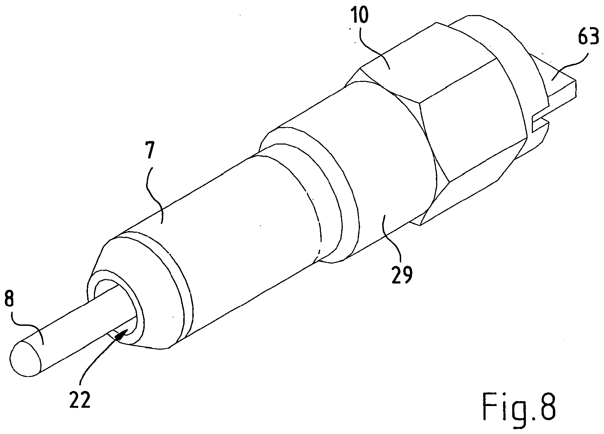

Die in den Ausführungsbeispielen nach Fig. 4, 5 und 7 gezeigten Drucksensoren werden üblicherweise gerade im sensiblen Bereich der Meßeinrichtung 6 zu schützen sein. Hierzu wird günstigerweise eine Hülse 7 auf den vorderen Bereich des Drucksensors 1 aufgeschoben. Eine solche Hülse 7 ist zum Beispiel in der Variante nach Fig. 8 gezeigt.

Die hier gezeigte Variante weist zusätzlich noch einen Glühstift 8 auf, der aus der vorderen, endseitigen Ausnehmung 22 heraustaucht. Zwischen dem Glühstift 8 und der Wandung der Ausnehmung 22 verbleibt ausreichend Platz, um die Druckmessung durch die Membran 4, die in dieser Anordnung verdeckt ist, nicht zu behindern. Der Glühstift 8 hat die Aufgabe, zum Beispiel bei einem Dieselmotor, für ein Vorglühen zu sorgen und so das Startverhalten des Dieselmotors günstig zu beeinflussen.

## Patentansprüche

1. Drucksensor, der in einem zylinderartigen Brennraum eines Verbrennungsmotors anordenbar ist, bestehend aus einer Membran, die eine die druckbedingte Membranverformung aufnehmende Messeinrichtung von dem unter Druck stehenden Druckraum trennt und der Drucksensor von einem Grundkörper gebildet ist, der in eine Öffnung einer den Druckraum begrenzenden Wand einsetzbar ist, wobei die Membran parallel oder spitzwinklig zur Flächennormalen der Öffnung angeordnet ist, wobei der Grundkörper an seinem dem Druckraum zugewandten Ende eine sacklochartige Ausnehmung und in dem dem Druckraum zugewandten Bereich eine Abflachung aufweist, **dadurch gekennzeichnet, dass** der Grundkörper eine Membranöffnung aufweist, die einen Zugang von der Oberseite der Abflachung in die sacklochartige Ausnehmung (22) bildet, und dass die Membran in der Membranöffnung eingesetzt und dicht verbunden, z.B. verschweißt oder verklebt ist.

2. Drucksensor nach Anspruch 1, **dadurch gekennzeichnet, dass** der Drucksensor (1) Kontaktleitungen (61) zur Verbindung der Meßeinrichtung (6) mit einem Anschlußbereich (62) oder einer Auswerteinheit (63) aufweist und/oder die Kontaktleitung (61) auf der dem Druckraum (3) abgewandten Seite vorgesehen ist und/oder die Membran (4) Teil eines Membranhalters (44) ist und der Membranhalter (44) in die Membranausnehmung (43) und/oder Membranöffnung (42) des Grundkörpers eingesetzt ist.

3. Drucksensor nach Anspruch 2, **dadurch gekennzeichnet, dass** der Membranhalter (44) Kontaktleitungen (61) trägt und/oder der Membranhalter (44) sich längs der Längserstreckung des Grundkörpers (2) erstreckt und im Verhältnis zum vorderen Ende des Grundkörpers (2) lang ist.

4. Drucksensor nach einem der vorhergehenden Ansprüche, **dadurch gekennzeichnet, dass** die Membran (4) durch eine Materialschwächung (23) des Grundkörpers (2) gebildet ist und/oder der Grundkörper (2) dicht mit der Wand (31) verbindbar ist und/oder der Grundkörper (2) in ein Gewinde (33) einer Bohrung (32) der Wand (31) eindrehbar ist und/oder der Drucksensor (1) in einer Sackbohrung (32) der Wand (31) eingesetzt ist und im Boden (34) der Sackbohrung (32) eine Öffnung (35) zum Druckraum vorgesehen ist.

5. Drucksensor nach Anspruch 4, **dadurch gekennzeichnet, dass** das Gewinde (33) im hinteren Bereich des Grundkörpers (2) angeordnet ist und/oder sich der Grundkörper (2) von hinten nach vorne verjüngt und/oder sich der Grundkörper (2) aus mehreren miteinander fest verbindbaren Einzelteilen besteht und/oder der Grundkörper (2) einen Schraubenkopf (10) trägt und/oder der Grundkörper (2) bolzenartig (20) oder rohrartig ausgebildet ist.

6. Drucksensor nach einem oder beiden der Ansprüche 4 und 5, **dadurch gekennzeichnet, dass** die Öffnung (35) und die Sackbohrung (32) koaxial sind und/oder eine Dichtung (5), die zwischen dem Drucksensor (1) und dem Boden (34) der Sackbohrung (32) angeordnet ist, und/oder die Membran einen spitzen Winkel mit der Öffnung (35) einschließend angeordnet ist.

7. Drucksensor nach Anspruch 6, **dadurch gekennzeichnet, dass** der Drucksensor (1) einen Abstützrand (21) aufweist, der im Bereich der Membran (4) angeordnet ist und im eingebauten Zustand mit der Dichtung (5) zusammenwirkt und/oder das vordere Ende des Drucksensors einen Dichtsitz (26), insbesondere einen kegelartigen Dichtsitz (26), aufweist und der Dichtsitz (26) mit der die Öffnung (35) umgebenden Wand (31) zusammenwirkt.

8. Drucksensor nach Anspruch 7, **dadurch gekennzeichnet, dass** der Abstützrand (21) scheibenartig ausgebildet ist und an der Zylinderwand (36) der Bohrung (32) anliegt und/oder der Abstützrand (21) die Membran (4) gegen die Zylinderwand (36) der Bohrung (32) abstützt und/oder die Dichtung (5) einen Durchbruch (50) aufweist und/oder die Öffnung (35), der Durchbruch (50) und die Sackbohrung (32) koaxial sind.

9. Drucksensor nach Anspruch 1, **dadurch gekennzeichnet, dass** die Ausnehmung (22) für eine Materialschwächung (23) zur Bildung der Membran (4) zumindest mitdient und/oder die Abflachung (24) als eine Materialschwächung (23) zur Bildung der Membran (4) zumindest mitdient und/oder die Abflachung (24) die Kontaktleitungen (61) trägt.

10. Drucksensor nach Anspruch 9, **dadurch gekennzeichnet, dass** sich die Membran (4) im Wesentlich parallel zur Achse (37) der Bohrung (32) erstreckt und/oder die Membran (4) stegartig ausgebildet ist und/oder die Ausnehmung (22) koaxial zur Öffnung (35) ist bzw. parallel zur Flächennormale bzw. unter spitzem Winkel zur Flächennormale orientiert ist und/oder die Ausnehmung (22) und Öffnung (35) den gleichen Durchmesser aufweisen.

11. Drucksensor nach einem der Ansprüche 9 und 10 oder mehreren der vorhergehenden Ansprüche, **dadurch gekennzeichnet, dass** die Membran (4) durch eine Materialschwächung (23) des Grundkörpers (2) derart gebildet ist, daß auf der einen Seite der Membran (4) die Ausnehmung (22) angeordnet ist und sich auf der anderen Seite die Abflachung (24) am Grundkörper (2) befindet und/oder der Grundkörper (2) an seinem, dem Druckraum abgewandten Ende eine Endöffnung (28) aufweist, welche eine Auswerteinheit (63) und/oder einen Anschlußbereich (62) aufnimmt.

12. Drucksensor nach Anspruch 11, **dadurch gekennzeichnet, dass** die Auswerteinheit (63) auf einer Platine angeordnet ist und in der Endöffnung (28) Führungsnuten (202) zur Aufnahme der Platine vorgesehen sind und/oder die Kontaktleitungen (61) zumindest an ihrem, der Membran (4) abgewandten Seite Kontaktflächen (64) aufweien, um ein Anhaften von Verbindungsleitungen zu ermöglichen.

13. Drucksensor nach einem der Ansprüche 11 und 12, **dadurch gekennzeichnet, dass** die Abflachung (24) an ihrem, der Membran (4) abgewandten Ende einen Durchbruch (27) zur Endöffnung (28) besitzt und/oder der Grundkörper (2) eine Hülse (7) trägt und gegebenenfalls die Hülse (7) in einer Bohrung (32) dicht mit der Wand (31) verbindbar, insbesondere einschraubbar ist.

14. Drucksensor nach einem der vorhergehenden Ansprüche, **dadurch gekennzeichnet, dass** die Membran (4) scheibenartig (41) ausgebildet ist und/oder die Membran (4) durch eine Hinterfräsung (25) des Grundkörpers (2) gewonnen wird und/oder sich die Membran (4) zumindest auf einem Teil des Hülsenrandes (70) abstützt.

15. Drucksensor nach einem der vorhergehenden Ansprüche, **gekennzeichnet durch** eine resistiv, kapazitiv oder induktiv wirkende Meßeinrichtung (6) und/oder, **dadurch** dass die Meßeinrichtung (6) als auf der Membran (4) angeordneter Dehnmeßstreifen (60) ausgebildet ist und/oder die Meßeinrichtung (6) zusätzlich einen Temperatursensor aufweist.

16. Drucksensor nach Anspruch 15, **dadurch gekennzeichnet, dass** die Meßeinrichtung (6) in Dünnschichttechnologie auf die Membran aufgetragen ist und/oder die Kontaktleitungen (61) als dünne Schichten, bzw. in Dünnschichttechnologie ausgebildet sind und/oder die Meßeinrichtung (6) und die Kontaktleitungen (61) in einem gemeinsamen Bearbeitungsschritt auf dem Grundkörper oder den Membranhalter aufgetragen sind und/oder an dem dem Druckraum (3) abgewandten Ende des Grundkörper (2) die Kontaktleitung (61) in einem Anschluß (62) endet.

17. Drucksensor nach einem der vorhergehenden Ansprüche 9 bis 16, **dadurch gekennzeichnet, dass** der Grundkörper (2) zumindest teilweise prismatisch ausgebildet ist, zumindest in dem dem Druckraum (3) zugewandten Bereich eine Abflachung (24) aufweist, und der Grundkörper (2) an seiner dem Druckraum zugewandten Stirnseite eine Ausnehmung (22) besitzt, wobei sich die Membran (4) zwischen der Abflachung (24) und der Ausnehmung (22) erstreckt und/oder der Grundkörper (2) bzw. die Membran (4) aus Metall oder Sintermaterialien, wie Keramik oder dergleichen, besteht.

18. Drucksensor nach einem der vorhergehenden Ansprüche 9 bis 17, **dadurch gekennzeichnet, dass** die Ausnehmung (22) einen Glühstift (8) aufnimmt und/oder der Glühstift (8) von der Innenwand der Ausnehmung (22) bzw. der Membran (4) beabstandet ist und/oder der Glühstift (8) die Ausnehmung (22) nicht verschließt und über dem Rand der Ausnehmung (22) vorsteht und/oder der über den Rand der Ausnehmung (22), in den Druckraum (3) hineinreichende Bereich des Glühstiftes (8) bei Strombeaufschlagung des Glühstiftes sich aufheizt.

19. Druckerfassungsanordnung für Verbrennungsmotoren, wobei die den Druckraum (3) begrenzende Wand (31) eine Bohrung oder Sackbohrung (32) zur Aufnahme eines Drucksensors nach einem der vorhergehenden Ansprüche aufweist.

## Claims

1. Pressure sensor that can be arranged in a cylinder-like combustion chamber of a combustion engine, consisting of a membrane separating a measuring device receiving the pressureinduced membrane deformation from the pressurized pressure chamber, and the pressure sensor is formed by a basic body that can be inserted in an opening of a wall delimiting the pressure chamber, wherein the membrane is arranged parallel or acute-angled to the surface normal of the opening, wherein the basic body has on its end facing the pressure chamber a blind hole-like recess and in the area facing the pressure chamber a flattening, **characterized in that** the basic body has a membrane opening forming an access from the surface of the flattening in the blind hole-like recess (22), and that the membrane is inserted in the membrane opening and connected sealing, for example welded or glued.

2. Pressure sensor according to claim 1, **characterized in that** the pressure sensor (1) has contact leads (61) for connecting the measuring device (6) with a joining area (62) or an evaluation unit (63), and/or the contact lead (61) is provided on the side opposite the pressure chamber (3), and/or the membrane (4) is part of a membrane holding device (44), and the membrane holding device (44) is inserted in the membrane recess (43) and/or the membrane opening (42) of the basic body.

3. Pressure sensor according to claim 2, **characterized in that** the membrane holding device (44) carries contact leads (61), and/or the membrane holding device (44) extends along the longitudinal extension of the basic body (2) and is long relatively to the front end of the basic body (2).

4. Pressure sensor according to one of the preceding claims, **characterized in that** the membrane (4) is formed by a material weakening (23) of the basic body (2), and/or the basic body (2) can be connected sealing with the wall (31), and/or the basic body (2) can be screwed in a thread (33) of a bore hole (32) of the wall (31), and/or the pressure sensor (1) is inserted in a blind hole (32) of the wall (31), and in the bottom (34) of the blind hole (32) an opening (35) to the pressure chamber is provided.

5. Pressure sensor according to claim 4, **characterized in that** the thread (33) is arranged in the back area of the basic body (2), and/or the basic body (2) tapers from the back to the front, and/or the basic body (2) consists of several single parts that can be connected tightly, and/or the basic body (2) carries a screw head (10), and/or the basic body (2) is formed bolt (20)- or pipe-like.

6. Pressure sensor according to one or both of claims 4 and 5, **characterized in that** the opening (35) and the blind hole (32) are coaxial, and/or a sealing (5) arranged between the pressure sensor (1) and the bottom (34) of the blind hole (32) and/or the membrane are arranged forming an acute angle with the opening (35).

7. Pressure sensor according to claim 6, **characterized in that** the pressure sensor (1) has a supporting edge (21) arranged in the area of the membrane (4) and interacting, when installed, with the sealing (5), and/or the front end of the pressure sensor has a sealing seat (26), in particular a cone-shaped sealing seat (26), and the sealing seat (26) interacts with the wall (31) surrounding the opening (35).

8. Pressure sensor according to claim 7, **characterized in that** the supporting edge (21) is configured disc-like and is in contact with the cylinder wall (36) of the bore hole (32), and/or the supporting edge (21) supports the membrane (4) towards the cylinder wall (36) of the bore hole (32), and/or the sealing (5) has a break-through (50), and/or the opening (35), the break-through (50) and the blind hole (32) are coaxial.

9. Pressure sensor according to claim 1, **characterized in that** the recess (22) at least co-serves for a material weakening (23) for forming the membrane (4), and/or the flattening (24) at least co-serves as a material weakening (23) for forming the membrane (4), and/or the flattening (24) carries the contact leads (61).

10. Pressure sensor according to claim 9, **characterized in that** the membrane (4) extends essentially parallel to the axis (37) of the bore hole (32), and/or the membrane (4) is formed like a web, and/or the recess (22) is coaxial to the opening (35) or parallel to the surface normal or is orientated at an acute angle to the surface normal, and/or the recess (22) and the opening (35) have identical diameters.

11. Pressure sensor according to one of the claims 9 and 10 or several of the preceding claims, **characterized in that** the membrane (4) is formed by a material weakening (23) of the basic body (2) such that on one side of the membrane (4) the recess (22) is arranged, and on the other side the flattening (24) is located at the basic body (2), and/or the basic body (2) has an end opening (28) at its end opposite the pressure chamber, the end opening receiving an evaluation unit (63) and/or a joining area (62).

12. Pressure sensor according to claim 11, **characterized in that** the evaluation unit (63) is arranged on a board, and in the end opening (28) guide grooves (202) are provided for holding the board, and/or the contact leads (61) have at least on their side opposite the membrane (4) contact surfaces (64) to make adhering of the contact leads possible.

13. Pressure sensor according to one of the claims 11 and 12, **characterized in that** the flattening (24) has on its end opposite the membrane (4) a break-through (27) to the end opening (28), and/or the basic body (2) carries a sleeve (7) and, if necessary, the sleeve (7) can be connected snugly in a bore hole (32) with the wall (31), in particular screwed in.

14. Pressure sensor according to one of the preceding claims, **characterized in that** the membrane (4) is configured disc-like, and/or the membrane (4) is created by back-milling (25) of the basic body (2), and/or the membrane (4) is supported at least on a part of the sleeve edge (70).

15. Pressure sensor according to one of the preceding claims, **characterized by** a resistively, capacitively or inductively acting measuring device (6), and/or in that the measuring device (6) is configured as strain gauge (60) arranged on the membrane (4), and/or in that the measuring device (6) additionally has a temperature sensor.

16. Pressure sensor according to claim 15, **characterized in that** the measuring device (6) is applied to the membrane in thin film technology, and/or the contact leads (61) are configured as thin layers or in thin film technology, and/or the measuring device (6) and the contact leads (61) are applied to the basic body or the membrane holding device in a common processing step, and/or the contact lead (61) ends in a connection (62) at the end of the basic body (2) opposite the pressure chamber (3).

17. Pressure sensor according to one of the preceding claims 9 to 16, **characterized in that** the basic body (2) is designed at least partly prism-like, has a flattening (24) at least in the area facing the pressure chamber (3), and the basic body (2) has a recess (22) at its front side facing the pressure chamber, wherein the membrane (4) extends between the flattening (24) and the recess (22), and/or the basic body (2) or the membrane (4) consists of metal or sintered materials such as ceramics or the like.

18. Pressure sensor according to one of the preceding claims 9 to 17, **characterized in that** the recess (22) holds a glow plug (8), and/or the glow plug (8) is spaced apart from the interior wall of the recess (22) or the membrane (4), and/or the glow plug (8) does not seal the recess (22) and projects beyond the edge of the recess (22), and/or the area of the glow plug (8) extending over the edge of the recess (22) in the pressure chamber (3) is heated when the glow plug is electrified.

19. Pressure recording arrangement for combustion engines, wherein the wall (31) delimiting the pressure chamber (3) has a bore hole or a blind hole (32) for receiving a pressure sensor according to one of the preceding claims.

## Revendications

1. Capteur de pression, pouvant être placé dans une chambre à combustion cylindrique d'un moteur à combustion, consistant en une membrane séparant un dispositif de mesure, qui mesure la déformation de la membrane sous l'effet de la pression dans la chambre de pression et, étant formé à partir d'un corps de base, pouvant être introduit dans une ouverture dans une paroi délimitant la chambre de pression, avec la membrane orientée parallèlement ou sous un angle aigu par rapport à la normale à la surface de l'ouverture, et avec un corps de base possédant dans l'extrémité proche de la chambre de pression un trou borgne et dans l'extrémité proche de la chambre de pression une zone aplatie, **caractérisé en ce que** le corps de base comporte une ouverture pour la membrane formant un accès de la surface supérieure de la zone aplatie au trou borgne (22) et **en ce que** la membrane est introduit dans l'ouverture pour la membrane et fixé de façon étanche, par exemple pour soudage ou collage.

2. Capteur de pression selon la revendication 1, **caractérisé en ce que** le capteur de pression (1) comporte des conducteurs de contact (61) pour interconnecter le dispositif de mesure (6) et une zone de contact (62) ou une unité d'analyse (63) et/ou en ce que le conducteur de contact (61) est prévu sur la face opposée de la chambre de pression (3) et/ou **en ce que** la membrane (4) fait partie d'un porte-membrane (44) et **en ce que** le porte-membrane (44) est placé dans un évidement (43) pour la membrane et/ou dans une ouverture (42) pour la membrane.

3. Capteur de pression selon la revendication 2, **caractérisé en ce que** le porte-membrane (44) comporte des conducteurs de contact (61) et/ou **en ce que** le porte-membrane (44) s'étend le long de l'axe longitudinal du corps de base (2) avec une longueur supérieure à celle de l'extrémité avant du corps de base (2).

4. Capteur de pression selon une des revendications précédentes, **caractérisé en ce que** la membrane (4) est créée par un affaiblissement du matériau (23) du corps de base (2) et/ou **en ce que** le corps de base (2) peut être lié de façon étanche à la paroi (31) et/ou **en ce que** le corps de base (2) peut être vissé dans un perçage (32) à filet (33) dans la paroi (31) et/ou **en ce que** le capteur de pression (1) est placé dans un perçage borgne (32) de la paroi (31) ayant au fond (34) une ouverture de passage (35) vers la chambre de pression.

5. Capteur de pression selon la revendication 4, **caractérisé en ce que** le filet (33) est situé dans la partie arrière du corps de base (2) et/ou **en ce que** le corps de base (2) s'effile vers l'avant et/ou **en ce que** le corps de base (2) consiste en plusieurs parties élémentaires pouvant être liées de façon rigide entre elles et/ou **en ce que** le corps de base (2) comporte une tête de vis (10) et/ou **en ce que** le corps de base (2) possède une forme de boulon ou de tube.

6. Capteur de pression selon une ou les deux revendications précédentes 4 et 5, **caractérisé en ce que** l'ouverture (35) et le perçage borgne (32) sont coaxiaux et/ou **en ce qu'**un joint d'étanchéité (5) est situé entre le capteur de pression (1) et le fond (34) du perçage (32) et/ou **en ce que** la membrane forme un angle aigu avec l'ouverture (35).

7. Capteur de pression selon la revendication 6, **caractérisé en ce que** le capteur de pression (1) possède un bord d'appui (21) dans la zone de la membrane (4) qui interagit à l'état monté avec le joint d'étanchéité (5) et/ou **en ce que** l'extrémité avant du capteur de pression possède un siège d'étanchéité (26), en particulier un siège d'étanchéité conique (26) et **en ce que** le siège d'étanchéité (26) interagit avec la zone de la paroi (31) entourant l'ouverture (35).

8. Capteur de pression selon la revendication 7, **caractérisé en ce que** le bord d'appui (21) possède une forme de disque et s'appuie contre la paroi cylindrique (36) du perçage (32) et/ou **en ce que** le bord d'appui (21) appuie la membrane (4) contre la paroi cylindrique (36) du perçage (32) et/ou **en ce que** le joint d'étanchéité (5) possède un perçage (50) et/ou **en ce que** l'ouverture (35), le perçage (50) et le perçage borgne (32) sont coaxiaux.

9. Capteur de pression selon la revendication 1, **caractérisé en ce que** l'évidement (22) sert au moins partiellement par l'affaiblissement de matière (23) à la création de la membrane (4) et/ou **en ce que** l'aplatissement (24) sert au moins partiellement comme affaiblissement de matière (23) à la création de la membrane (4) et/ou **en ce que** l'aplatissement (24) comporte les conducteurs de contact (61).

10. Capteur de pression selon la revendication 9, **caractérisé en ce que** la membrane (4) s'étend essentiellement parallèlement à l'axe (37) du perçage (32) et/ou **en ce que** la membrane (4) possède une forme d'une bande et/ou **en ce que** l'évidement (22) est coaxial par rapport à l'ouverture (35) et parallèle à la normale à la surface ou orienté à un angle aigu par rapport à la normale à la surface et/ou **en ce que** l'évidement (22) et l'ouverture (35) possèdent le même diamètre.

11. Capteur de pression selon une des revendications 9 ou 10 ou selon plusieurs des revendications précédentes, **caractérisé en ce que** la membrane (4) est formée par un affaiblissement de matériau (23) du corps de base (2) de façon à ce que d'un côté est situé l'évidement (22) et de l'autre côté l'aplatissement (24) du corps de base (2) et/ou **en ce que** le corps de base (2) possède une ouverture d'extrémité (28) à son extrémité opposée à la chambre de pression recevant une unité d'analyse (63) et/ou une zone d'interconnexion (62).

12. Capteur de pression selon la revendication 11, **caractérisé en ce que** l'unité d'analyse (63) est située sur une platine et **en ce que** des gorges de guidage (202) prévues pour recevoir la platine existe au niveau de l'ouverture d'extrémité (28) et/ou en ce que les conducteurs de contact (61) comportent au moins à leur face opposée à la membrane (4) des surfaces de contact (64) permettant l'adhésion de conducteurs d'interconnexion.

13. Capteur de pression selon une des revendications 11 ou 12, **caractérisé en ce que** l'aplatissement (24) possède à son extrémité opposée à la membrane (4) un perçage (27) vers l'ouverture d'extrémité (28) et/ou **en ce que** le corps de base (2) comporte une douille (7) et, le cas échéant, la douille (7) pouvant être fixée, voire vissée dans un perçage (32) dans la paroi (31).

14. Capteur de pression selon une des revendications précédentes, **caractérisé en ce que** la membrane (4) possède une forme de disque (41) et/ou **en ce que** la membrane (4) est générée par un fraisage arrière (25) du corps de base (2) et/ou **en ce que** la membrane (4) s'appuie au moins sur une partie du bord de douille (70).

15. Capteur de pression selon une des revendications précédentes, **caractérisé par** un dispositif de mesure (6) à base résistive, capacitive ou inductive et/ou par un dispositif de mesure (6) est réalisée par une jauge de contrainte (60) située sur la membrane (4) et/ou **caractérisé en ce que** la dispositif de mesure (6) comportant de plus un capteur de température.

16. Capteur de pression selon la revendication 15, **caractérisé en ce que** le dispositif de mesure (6) est réalisé selon la technologie en couches minces déposées sur la membrane et/ou en ce que les conducteurs de contact (61) est formé par des couches minces ou fabriqué selon la technologie en couches minces et/ou **en ce que** le dispositif de mesure (6) et les conducteurs de contact (61) sont déposés en une étape de fabrication commune sur le corps de base ou sur le porte-membrane et/ou **en ce qu'**au niveau de l'extrémité du corps de base (2) opposé à la chambre de pression (3), le conducteur de contact (61) est terminé par un connecteur (62).

17. Capteur de pression selon l'une des revendications précédentes 9 à 16, **caractérisé en ce que** le corps de base (2) possède au moins partiellement une forme de prisme et, au moins dans la zone faisant face à la chambre de pression (3), un aplatissement (24) et **en ce que** le corps de base (2) possède un évidement (22) au niveau de sa face frontale située en face de la chambre de pression de sorte que la membrane (4) est située entre l'aplatissement (24) et l'évidement (22) et/ou **en ce que** le corps de base (2) ou la membrane (4) est en métal ou en un matériau fritté, tel que de la céramique ou des matériaux similaires.

18. Capteur de pression selon une des revendications précédentes 9 à 17, **caractérisé en ce que** l'évidement (22) reçoit une tige d'allumage (8) et/ou **en ce que** la tige d'allumage (8) est située à une distance donnée de la paroi intérieure de l'évidement (22) et de la membrane (4) et/ou **en ce que** la tige d'allumage (8) ne ferme pas l'évidement (22) et dépasse le bord de l'évidement (22) et/ou **en ce que** l'extrémité de la tige d'allumage (8) dépassant le bord de l'évidement (22) vers l'intérieur de la chambre de pression (3) s'échauffe lors de l'application d'un courant électrique sur cette tige d'allumage.

19. Dispositif de détection de la pression destiné aux moteurs à combustion ayant une paroi (31) délimitant la chambre de pression (3) et comportant un perçage ou un perçage non débouchant (32) afin de recevoir un capteur de pression selon une des revendications précédentes.
